# EUROPÄISCHE PATENTANMELDUNG

(11) **EP 1 531 076 A2**
(43) Veröffentlichungstag der Anmeldung: **18.05.2005**
(21) Anmeldenummer: 05003607.8
(22) Anmeldetag: 14.10.2003
(51) Int. Cl.: B60K 15/05

(54) **Verriegelungseinrichtung für eine Tankklappe und Verfahren zur Steuerung einer Verriegelungseinrichtung**

(30) Priorität: 17.10.2002 DE 10248420
(62) Teilanmeldung aus: 03023052.8
(71) Anmelder: Hella KGaA Hueck & Co., 59552 Lippstadt (DE)
(72) Erfinder: Muschner, Andreas, 33100 Paderborn (DE); Langkau, Johannes, 59558 Lippstadt (DE); Kleine-Weischede, Jost, 59174 Kamen (DE); Stümpel, Josef, 33178 Borchen (DE)

(57) **Zusammenfassung**

Eine bekannte Verriegelungseinrichtung (1) für eine Tankklappe (2) weist einen mit einer Öffnung versehenen Laschenraum (6) zur Aufnahme einer von der Tankklappe (2) abstehenden Lasche (8) auf. Zur Arretierung der Lasche (8) ist ein Verriegelungsbolzen (5) durch eine Triebfeder in den Laschenraum (6) ausfahrbar und zum Entriegeln durch Aussteuerung seines Stellantriebs (4) elektromotorisch zurückfahrbar. Unterhalb des Weges des Verriegelungsbolzen (5) ist ein federnder Auswerfer (15) für die Lasche (8) angeordnet. Die Ansteuerung des Stellantriebs (4) erfolgt durch Betätigung eines Schalters, der sich z.B. im Innenraum des Kraftfahrzeuges befindet. Bei einer erfindungsgemäßen Verriegelungseinrichtung (1) und bei einem erfindungsgemäßen Verfahren zur Steuerung der Verriegelungseinrichtung (1) soll ein Schalter außen am Kraftfahrzeug vorgesehen sein. Erfindungsgemäß ist an dem federnden Auswerfer ein Druckschalter (33) angeordnet, durch den der Stellantrieb (4) des Verriegelungsbolzens (5) angesteuert wird.

## Beschreibung

Die Erfindung betrifft eine Verriegelungseinrichtung für eine Tankklappe gemäß dem Oberbegriff des Anspruchs 1 und ein Verfahren zur Steuerung einer Verriegelungseinrichtung gemäß dem Oberbegriff des Anspruchs 8.

Verriegelungseinrichtungen für Tankklappen sind zum Anschluss an Zentralverriegelungen von Kraftfahrzeugen vorgesehen.

Eine der Anmelderin bekannte und in ihrer deutschen Anmeldung DE 102 12 783 beschriebene Verriegelungseinrichtung für eine Tankklappe weist ein Gehäuse auf, in dem ein elektromotorischer Stellantrieb mit einem Verriegelungsbolzen angeordnet ist. Das Gehäuse bildet einen Laschenraum zur Aufnahme einer von der Tankklappe abstehenden Lasche, der oben zur Tankklappe hin mit einer Öffnung versehen ist. Der Verriegelungsbolzen ist durch eine Triebfeder in den Laschenraum ausfahrbar und elektromotorisch zurückfahrbar. Unterhalb des Weges des Verriegelungsbolzen befindet sich im Laschenraum ein federnder Auswerfer. Der federnde Auswerfer kann z.B. durch eine Blattfeder oder durch ein in den des Verriegelungsbolzens fahrbares Auswerferelement mit einer Schraubenfeder gebildet sein.

In einer Verriegelungsstellung ist die Lasche in den Laschenraum eingetaucht, wobei die Spitze der Lasche auf einer Aufsetzfläche des Auswerfers diesen gegen seine Federkraft nach unten drückt. Der Verriegelungsbolzen ist ausgefahren, ragt durch eine Öffnung der Lasche und arretiert die Lasche durch den Federdruck seiner Triebfeder. Zum Entriegeln, d.h. zum Öffnen der Tankklappe, wird ein mit dem Stellantrieb verbundener Schalter betätigt. Nach Betätigung des Schalters wird der Verriegelungsbolzen elektromotorisch aus der Öffnung der Lasche zurückgefahren. Sobald der Verriegelungsbolzen die Lasche freigibt, wird diese durch die Federkraft des Auswerfers nach oben gedrückt. Anschließend wird der Verriegelungsbolzen durch die Triebfeder wieder ausgefahren und befindet sich im Weg der Lasche. Beim manuellen Schließen der Tankklappe drückt die Spitze der Lasche den Verriegelungsbolzen im Fall der Blattfeder direkt oder im Fall des Auswerferelemente mit Schraubenfeder über das Auswerferelement gegen den Druck der Triebfeder soweit zurück, dass sie passieren kann und der Verriegelungsbolzen in die Öffnung der Lasche in Verriegelungsstellung rutschen kann.

Der Schalter zum Entriegeln des Verriegelungsbolzens befindet sich z.B. im Innenraum des Kraftfahrzeuges vor dem Fahrersitz und ist mit dem Stellantrieb verbunden. Die Tankklappe lässt sich mit diesem Schalter nur durch eine Person im Kraftfahrzeug öffnen.

Aufgabe der Erfindung ist es, eine Verriegelungseinrichtung für eine Tankklappe gemäß dem Oberbegriff des Anspruchs 1 und ein Verfahren zur Steuerung einer Verriegelungseinrichtung gemäß dem Oberbegriff des Anspruchs 8 zu entwickeln, wobei ein Schalter außen am Kraftfahrzeug vorgesehen werden soll.

Die Aufgabe ist durch die kennzeichnenden Merkmale des Anspruchs 1 und des Anspruchs 8 gelöst. In den Unteransprüchen sind vorteilhafte Ausführungsformen beschrieben.

Erfindungsgemäß wird an dem federnden Auswerfer ein Druckschalter so angeordnet, dass er bei Druck auf die geschlossene Tankklappe über den Auswerfer betätigt wird. Bei Betätigung des Druckschalters kann der Stellantrieb angesteuert werden, wodurch der Verriegelungsbolzen zurückgefahren und die Tankklappe durch den Auswerfer aufgestoßen wird. Die Tankklappe kann mit Hilfe dieses erfindungsgemäßen Druckschalters benutzerfreundlich durch eine am Kraftfahrzeug stehende Person geöffnet werden. Vorteil eines erfindungsgemäßen Druckschalters an der Tankklappe ist auch, das der Platz und die Kosten für einen Schalter mit Anzeige am Amaturenbrett eingespart werden können. Als Druckschalter wird ein Mikroschalter eingesetzt, der bei einem Hub von z.B. 0,5 bis 2 mm schaltet.

Gemäß Anspruch 2 kann zwischen dem Druckschalter und dem Stellantrieb eine Rechnereinheit angeschlossen sein, in der z.B. Schaltbedingungen niedergelegt sind. Dadurch wird ermöglicht, dass der Stellantrieb nicht angesteuert wird, wenn die Verriegelungsstellung auch bei Druck auf die Tankklappe beibehalten werden soll, z.B. in einer Parksituation oder bei kurzzeitiger versehentlicher Berührung.

Ein Schaltelement des Druckschalters kann gemäß Anspruch 3 auf einer einer Aufsetzfläche für die Lasche gegenüberliegenden Seite eines Auswerferelementes des Auswerfers, und zwar in Verriegelungsstellung d.h. bei geschlossener Tankklappe direkt am Auswerferelement, angeordnet sein. Bei Druck auf die geschlossene Tankklappe und damit von oben auf den Auswerfer wird der Druck über das Auswerferelement auf das Schaltelement des Druckschalters geleitet und der Schalter betätigt.

Der Auswerfer kann z.B. als eine Blattfeder mit zwei senkrecht zueinander verlaufenden Schenkeln ausgebildet sein, wobei der erste Schenkel im Gehäuse befestigt ist, der zweite Schenkel in den Laschenraum ragt und das Auswerferelement bildet. Auf der Oberseite des zweiten Schenkels befindet sich die Aufsetzfläche für die Spitze der Lasche. Das Schaltelement kann an der Unterseite des zweiten Schenkels angeordnet sein.

Der Auswerfer kann auch gemäß Anspruch 4 alternativ ein Auswerferelement und eine Schraubenfeder aufweisen, wobei die Schraubenfeder das Auswerferelement auf der der Aufsetzfläche gegenüberliegenden Seite beaufschlagt. Der Druckschalter ist auf derselben Seite des Auswerferelementes wie die Schraubenfeder angeordnet, wobei sich das Schaltelement innerhalb oder im Randbereich neben der Schraubenfeder befindet.

Bei einem Auswerferelement, das als Zylinderelement mit einer Öffnung für die Schraubenfeder gemäß Anspruch 5 ausgebildet ist und eine durch die Schraubenfeder beaufschlagte Decke mit der Aufsetzfläche und einen Mantel aufweist, kann das Schaltelement unterhalb einer Bodenfläche des Mantels angeordnet sein.

Weist das Auswerferelement gemäß Anspruch 6 an seiner Mantelfläche einen unteren Vorsprung auf, so kann das Schaltelement im Bereich des Vorsprungs angeordnet sein.

Der Druckschalter kann gemäß Anspruch 7 neben dem Schaltelement ein Gehäuseelement aufweisen, wobei das Gehäuseelement außerhalb des Laschenraumes angeordnet sein und das Schaltelement durch eine Öffnung in den Laschenraum ragen kann.

Zur Steuerung der Verriegelungseinrichtung gemäß Anspruch 8 kann der Stellantrieb bei Betätigung des an dem Auswerfer angeordneten Druckschalters benutzerfreundlich angesteuert werden.

Dabei kann die Ansteuerung des Stellantriebs gemäß Anspruch 9 nur dann erfolgen, wenn in einer zwischen dem Druckschalter und dem Stellantrieb geschalteten Rechnereinheit abgelegte Schaltbedingungen erfüllt sind.

Solche Schaltbedingungen, die einzeln oder gleichzeitig erfüllt sein sollten, können gemäß Anspruch 10 sein:
- Die Zentralverriegelung des Kraftfahrzeuges steht auf "auf'". Dies verhindert die Öffnung des Tankdeckels bei geschlossener Zentralverriegelung. Eine mögliche Schaltbedingung wäre auch, die Zentralverriegelung ist von innen auf "zu" gestellt worden. Dies ermöglicht ein Betanken durch eine Bedienungsperson, während sich der Fahrer im verschlossenen Kraftfahrzeug befindet.
- Die Betätigung des Druckschalters erfolgt über eine Mindestdauer tₐ von z.B. 1 bis 2 s. Durch diese Schaltbedingung kann ein versehentliches Öffnen der Tankklappe durch kurze Berührung, z.B. durch eine Ballberührung oder eine Berührung in einer Waschanlage, verhindert werden.
- Seit der letzten Ansteuerung, d. h. dem letzten Öffnen der Tankklappe, ist eine Mindestzeit von t_{b}von z.B. 5 bis 15 min vergangen. Dies ermöglicht ein sicheres Schließen der Tankklappe nach dem Tanken, ohne Gefahr, dass die Tankklappe beim Zudrücken sofort wieder geöffnet wird.

Die Mindestdauer tₐ und die Mindestzeit t_{b} können parametriebar abgelegt sein, wobei ihre Werte beim Programmieren der Rechnereinheit an den Fahrzeugtyp z.B. abhängig von der Form der Tankklappe angepasst werden können.

Die Erfindung wird anhand eines in der Zeichnung schematisch dargestellten Beispiels weiter erläutert.

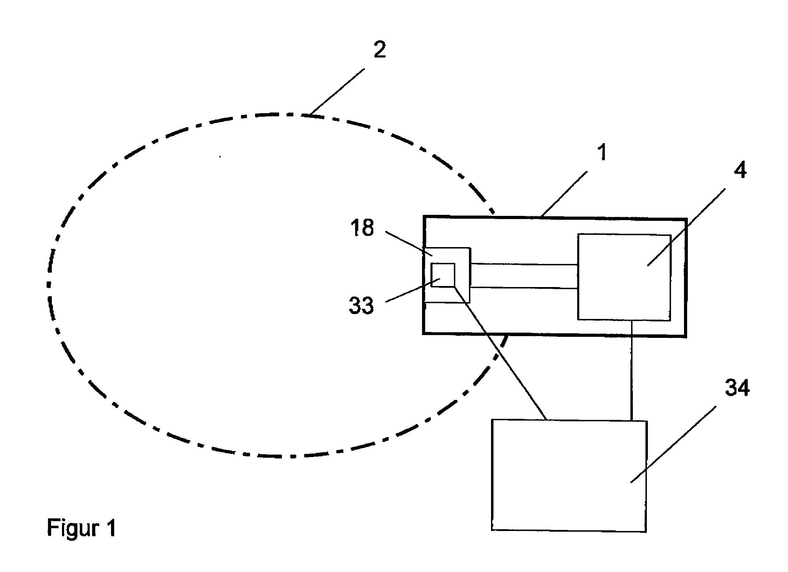

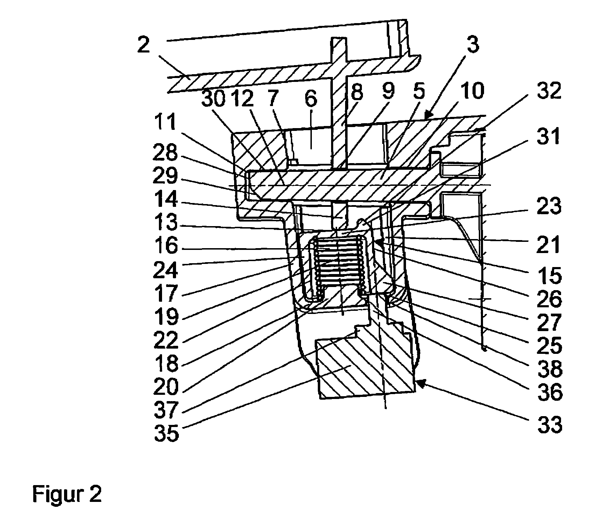

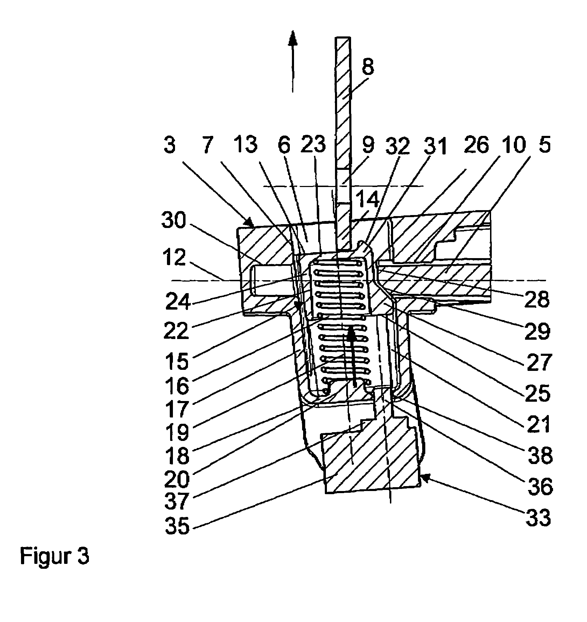

Figur 1 zeigt eine Prinzipskizze einer an eine Rechnereinheit angeschlossenen Verriegelungseinrichtung. In den Figuren 2 und 3 ist die Verriegelungseinrichtung in Verriegelungsstellung und in Entriegelungsstellung jeweils ausschnittsweise anhand eines Schnittes durch den Laschenraum dargestellt.

Eine erfindungsgemäße Verriegelungseinrichtung 1 für eine Tankklappe 2 weist ein Gehäuse 3 auf, das einen elektromotorischer Stellantrieb 4 mit einem Verriegelungsbolzen 5 umgibt und das einen länglichen Laschenraum 6 mit einer Öffnung 7 bildet. Im eingebauten Zustand der Verriegelungseinrichtung 1 weist die in den Figuren 2 und 3 oben angeordnete Öffnung 7 zur Tankklappe 2, so dass eine von der Tankklappe 2 abstehende Lasche 8 in den Laschenraum 6 eintauchen kann. Von der Lasche 8 ist in Figur 3 nur ein unterer Abschnitt zu sehen, der mit einer Öffnung 9 versehen ist.

Der Stellantrieb 4 und der Verriegelungsbolzen 5 sind seitlich des Laschenraumes 6 auf der Tankklappe 2 abgewandten Seite angeordnet (Figur 1). Der Verriegelungsbolzen 5 ist derart durch eine Öffnung 10 in dem den Laschenraum 3 bildenden Gehäuse 3 geführt, dass seine Stirnfläche 11 beim Eintauchen der Lasche 8 in den Laschenraum 6 auf die Öffnung 9 der Lasche 8 treffen und der Verriegelungsbolzen 5 durch die Öffnung 9 gleiten kann. Der Verriegelungsbolzen 5 ist durch eine nicht dargestellte Triebfeder entlang seines Weges in den Laschenraum 6 ausfahrbar und elektromotorisch durch nicht dargestellte Elemente des Stellantriebes 4 zurückfahrbar. Die Bewegungsrichtung des Verriegelungsbolzens 5 entspricht dem Verlauf seiner Achse 12.

Im Laschenraum 6 ist unterhalb des Weges des Verriegelungsbolzens 2 ein federnder Auswerfer mit einer Aufsetzfläche 13 für eine Spitze 14 der Lasche 8 angeordnet. Die Aufsetzfläche 13 zeigt zur Öffnung 7 des Laschenraumes 5 und ist in etwa senkrecht zum Laschenweg angeordnet.

Der Auswerfer weist ein Auswerferelement 15 mit der Aufsetzfläche 13 und eine Schraubenfeder 16 auf, wobei die Schraubenfeder 16 das Auswerferelement 15 auf einer der Aufsetzfläche 13 gegenüberliegenden Seite beaufschlagt. Der durch das Gehäuse 3 gebildete Laschenraum 6 hat die Form eines nach oben offenen Zylinders mit einem Mantel 17 und einem Boden 18. Der Weg des Verriegelungsbolzens 5 verläuft im mittleren Bereich des Zylinders quer, d.h. senkrecht oder in einem Winkel zur Zylinderachse 19 in den Zylinder hinein.

Das Auswerferelement 15 ist als ein an den Laschenraum 3 angepasstes Zylinderelement ausgebildet. Dabei zeigt seine Aufsetzfläche 13 zur Öffnung 7 des Laschenraumes 3. Die Schraubenfeder 16 stützt sich am Boden 18 des Laschenraumes 3 ab. Der Boden 18 weist eine als kreisförmiger Vorsprung ausgebildete Halterung 20 auf, deren Durchmesser dem Innendurchmesser der Schraubenfeder 16 entspricht.

Der Querschnitt des Auswerferelementes 15 entspricht dem Querschnitt des Laschenraumes 6 derart, dass das Auswerferelement 15 in Richtung der Zylinderachse 19 im Laschenraum 6 des Mantels 17 verschiebbar und durch die Schraubenfeder 16 in den Weg des Verriegelungsbolzens 2 ausfahrbar ist. Dazu sind vom Mantel 17 vorspringende, parallel zur Zylinderachse 19 verlaufende Führungen 21 vorgesehen, die in entsprechende in der Zeichnung nicht sichtbare Einbuchtungen im Auswerferelement 15 greifen.

Das Auswerferelement 15 weist eine sich von der der Aufsetzfläche 13 gegenüberliegenden Fläche weit in das Innere bis in die Nähe der Aufsetzfläche 13 erstreckende Öffnung 22 auf, d.h. das Auswerferelement 15 hat im Wesentlichen die Form eines Hohlzylinders mit einer Decke 23 und einem Mantel 24. Dabei ragt die Schraubenfeder 16 in die Öffnung 22 d.h. in das Innere des Hohlzylinders und beaufschlagt die Decke 23 des Auswerferelementes 15 von unten. In Verriegelungsstellung des Verriegelungsbolzens 5 besteht zwischen der Bodenfläche 25 des Mantels 24 und dem Boden 18 des Laschenraumes 6 ein Abstand von z.B. 1 bis 3 mm. Die Schraubenfeder 16 ist zumindest soweit zusammendrückbar, dass sie sich vollständig im Innern des Hohlzylinders des Auswerferelementes 15 befindet und die Bodenfläche 25 den Boden 18 berührt.

Die Mantelfläche des Auswerferelementes 15 weist in einem dem Verriegelungsbolzen 5 zugewandten Bereich eine Aussparung 26 auf. Die Aussparung 26 beginnt bei einer bestimmten Höhe des Auswerferelementes 15 und erstreckt sich nach oben zur Öffnung 7 hin über die restliche Höhe. Sie erstreckt sich in ihrer Breite mindestens über die Breite des Verriegelungsbolzens 5. Durch die Aussparung 26 wird unterhalb ihres Beginns am Auswerferelement 15 ein Vorsprung 27 gebildet.

Die Stimfläche 11 des Verriegelungsbolzens 2 weist einen senkrecht zu seiner Achse 12 verlaufenden, oberen Abschnitt 28 und einen in Verriegelungsrichtung schräg nach oben verlaufenden unteren Abschnitt 29 auf. Im Bereich der Aussparung 26 verläuft die Mantelfläche des Auswerferelementes 15 dem oberen Abschnitt 28 des Verriegelungsbolzens 2 entsprechend senkrecht zur Achse 12, und am Übergang von der Aussparung 26 zum Vorsprung 27 dem unteren Abschnitt 29 entsprechend schräg nach oben. Dadurch ist zwischen dem Verriegelungsbolzen 5 und dem Auswerferelement 15 ein Formschluß möglich.

Im Mantel 17 des Laschenraumes 5 befindet sich auf der der Öffnung 10, durch die der Verriegelungsbolzen 5 in den Laschenraum 6 ragt, gegenüberliegenden Seite auf Höhe der Achse 12 des Verriegelungsbolzens 2 eine weitere Öffnung 30, deren Querschnitt dem Querschnitt des Verriegelungsbolzens 5 entspricht. In Verriegelungsstellung erstreckt sich der Verriegelungsbolzen 5 von der Öffnung 10 durch den Laschenraum 6 bis in diese Öffnung 30. Der Querschnitt des Verriegelungsbolzens 5 ist rund. Der Querschnitt des durch den Laschenraum 5 gebildeten Zylinders ist rechteckig mit abgerundeten Ecken. Er könnte auch eine andere Form, z.B. quadratisch oder rund haben.

Das Auswerferelement 15 ist an seiner Aufsetzfläche mit einer Erhebung 31 versehen, die sich an die Aussparung 26 anschließt und sich über deren Breite erstreckt. Die Erhebung 31 hat die Form eines schmalen Keils, dessen spitze Kante senkrecht zum Weg des Verriegelungsbolzens 2 verläuft. Eine der Aussparung 21 zugewandte Führungsfläche 32 der Erhebung 31 weist einen in Verriegelungsrichtung schräg nach oben führenden Verlauf auf, der einem kurzen Teilabschnitt des unteren Abschnitts 29 der Stirnfläche 11 des Verriegelungsbolzens 5 entspricht.
An dem Auswerfer ist ein Druckschalter 33 angeordnet, der über eine Rechnereinheit 34 an dem Stellantrieb 4 angeschlossen ist.

Der als Mirkroschalter ausgebildete Druckschalter 33 weist ein Gehäuse 35 auf, aus dem ein als runder Stößel aus gebildetes Schaltemelent 36 über eine Führung 37 herausragt. Das Schaltelement 36 des Druckschalters 33 ist auf der der Aufsetzfläche 13 gegenüberliegenden Seite an dem Auswerferelementes 15, und zwar unterhalb der Bodenfläche 25 seines Mantels 24 im Bereich des Vorsprungs 27, angeordnet. Dazu befindet sich das Gehäuse 35 des Druckschalters 33 unterhalb des Laschenraumes 6. Das Schaltelement 36 ragt durch eine Öffnung 38 des Bodens 18 des Laschenraumes 6, wobei es sich in Verriegelungsstellung bis zur Bodenfläche 25 am Vorsprung 27 des Auswerfelementes 15 erstreckt. D.h. das Schaltelement 36 ragt entsprechend dem Abstand der Bodenfläche 25 des Auswerfelementes 15 vom Boden 18 des Laschenraumes 17 z.B. 1 bis 3 mm in den Laschenraum 6. Der Hub des Druckschalters 33 ist kleiner als dieser Abstand, der im folgenden als Schaltweg bezeichnet wird.

Zum Entriegeln der Tankklappe 2 wird der Stellantrieb 4 durch den am Auswerferelement 15 angeordneten Druckschalter 33 über die Rechnereinheit 34 in Abhängigkeit von in der Rechnereinheit 34 abgelegten Schaltbedingungen angesteuert. Eine Ansteuerung des Stellantriebs 4 erfolgt bei Betätigung des Druckschalters 33 und Erfüllung der folgenden Schaltbedingungen:
- Schaltzustand einer Zentralverriegelung "auf",
- Mindestdauer tₐ der Betätigung des Druckschalters 33 von z.B. 2 s und
- Mindestzeit t_{b} seit der letzten Ansteuerung des Stellantriebs 4 von z.B. 10 min.

Bei Ansteuerung des Stellantriebs 4 wird der Verriegelungsbolzen 5 aus der Öffnung 9 der Lasche 8 zurückgefahren. Sobald er die Lasche 8 freigibt, wird sie mit dem Auswerfelement 15 durch die Federkraft (Pfeil in Figur 3) der sich entspannenden Schraubenfeder 16 nach oben gedrückt. Dabei wird das Auswerfelement 15 in den Weg des Verriegelungsbolzens 2 ausgefahren, bis seine Aussparung 26 auf den oberen Abschnitt 28 der Stirnfläche 11 des Verriegelungsbolzens 5 trifft und durch seinen vom unteren Abschnitt 29 zurückgehaltenen Vorsprung 27 an einem weiteren Verschieben nach oben gehindert wird. Die Tankklappe kann neu geöffnet werden.

Beim Schließen der Tankklappe 2 wird die Lasche 8 in dem Laschenraum 6 nach unten bewegt. Ihre Spitze 14 trifft auf die Aufsetzfläche 13, die sich bis auf die Aussparung 26 über den gesamten Querschnitt des Laschenraumes 6 erstreckt. Beim weiteren Hinunterdrücken des Lasche 8 wird das Auswerfelement 15 nach unten bewegt und die Schraubenfeder 16 zusammengedrückt. Sobald sich die Führungsfläche 32 der Erhebung 31 der Aufsetzfläche 13 im Bereich des unteren Abschnitts 29 der Stimfläche 11 des Verriegelungsbolzens 5 befindet, bewegt sich der Verriegelungsbolzen 5 entlang seines Weges über die Erhebung 31 durch die Öffnung 9 der Lasche 8 bis in die Öffnung 30 im Mantel 17 des Laschenraumes 6 in die Verriegelungsstellung. In dieser Stellung befindet sich die Bodenfläche 25 des Auswerfelementes 15 auf dem Schaltelement 36.

Zum Entriegeln wird durch Druck auf die Tankklappe 2 das Auswerfelement 15 und damit das Schaltelement 36 um den Schaltweg nach unten bewegt, so dass der Druckschalter 33 betätigt wird. Falls zusätzlich die oben erwähnten Schaltbedingungen erfüllt sind, wird der Stellantrieb 4 angesteuert und der Verriegelungsbolzen 5 zurückgefahren.

### Bezugszeichenliste

- 1: Verriegelungseinrichtung
- 2: Tankklappe
- 3: Gehäuse
- 4: Stellantrieb
- 5: Verriegelungsbolzen
- 6: Laschenraum
- 7: Öffnung des Laschenraumes
- 8: Lasche
- 9: Öffnung der Lasche
- 10: Öffnung des Laschenraums
- 11: Stirnfläche des Verriegelungsbolzens
- 12: Achse des Verriegelungsbolzens
- 13: Aufsetzfläche
- 14: Spitze der Lasche
- 15: Auswerferelement
- 16: Schraubenfeder
- 17: Mantel des Laschenraumes
- 18: Boden des Laschenraumes
- 19: Zylinderachse
- 20: Halterung
- 21: Führung
- 22: Öffnung
- 23: Decke des Auswerferelementes
- 24: Mantel des Auswerferelementes
- 25: Bodenfläche des Mantels
- 26: Aussparung
- 27: Vorsprung
- 28: oberer Abschnitt
- 29: unterer Abschnitt
- 30: Öffnung
- 31: Erhebung
- 32: Führungsfläche
- 33: Druckschalter
- 34: Rechnereinheit
- 35: Gehäuseelement
- 36: Schaltelement
- 37: Führung
- 38: Öffnung des Laschenraumes

## Patentansprüche

1. Verriegelungseinrichtung (1) für eine Tankklappe (2), die mit einem ansteuerbaren Stellantrieb (4) zum Entriegeln der Tankklappe und mit einem an den Stellantrieb (4) angeschlossenen Druckschalter (33) versehen ist, wobei der Druckschalter (33) durch Druck auf die Tankklappe (2) betätigbar ist, **dadurch gekennzeichnet, dass** der Druckschalter (33) über eine Rechnereinheit (34) mit darin abgelegten Schaltbedingungen an den Stellantrieb (4) angeschlossen ist.

2. Verriegelungseinrichtung für eine Tankklappe (2) nach Anspruch 1, **dadurch gekennzeichnet, dass** die Verriegelungseinrichtung (1) mit einem Gehäuse (3) versehen ist, in dem der elektromotorische Stellantrieb (4) mit einem Verriegelungsbolzen (5) angeordnet ist, und durch das ein mit einer oberen Öffnung (7) versehener Laschenraum (6) zur Aufnahme einer von der Tankklappe (2) abstehenden Lasche (8) gebildet ist, wobei der Verriegelungsbolzen (5) zur Verriegelung der Lasche (8) durch eine Triebfeder in den Laschenraum (6) ausfahrbar und zur Entriegelung elektromotorisch zurückfahrbar ist, wobei in dem Laschenraum (6) unterhalb des Weges des Verriegelungsbolzens (5) ein federnder Auswerfer und der an den Stellantrieb (4) angeschlossene Druckschalter (33) an dem Auswerfer angeordnet sind.

3. Verfahren zur Steuerung einer Verriegelungseinrichtung (1) für eine Tankklappe (2) nach Anspruch 1 oder 2, wobei zur Entriegelung der Tankklappe (2) ein Stellantrieb (4) der Verriegelungseinrichtung (1) durch einen Druckschalter (33) angesteuert wird und der Druckschalter (33) durch Druck auf die Tankklappe (2) betätigt wird, **dadurch gekennzeichnet, dass** der Stellantrieb (4) durch eine mit dem Druckschalter (33) verbundene Rechnereinheit (34) abhängig von in der Rechnereinheit (34) abgelegten Schaltbedingungen angesteuert wird.

4. Verfahren nach Anspruch 3, **dadurch gekennzeichnet, dass** bei Betätigung des Druckschalters (33) eine Ansteuerung des Stellantriebes (4) erfolgt, wenn eine oder mehrere der folgenden Schaltbedingungen erfüllt ist:
a) Zentralverriegelung auf,
b) Mindestdauer tₐ der Betätigung des Druckschalters (33) und
c) Mindestzeit t_{b} seit der letzten Ansteuerung.

5. Verfahren nach Anspruch 4, **dadurch gekennzeichnet, dass** zum Verriegeln der Tankklappe (2) ein Verriegelungsbolzen (5) durch eine Triebfeder ausgefahren, zum Entriegeln nach Ansteuerung des Stellantriebs (4) der Verriegelungsbolzen (5) elektromotorisch zurückgefahren und die Tankklappe (2) durch einen federnden Auswerfer geöffnet wird, wobei der Stellantrieb (4) bei Betätigung des an dem Auswerfer angeordneten Druckschalters (33) angesteuert wird.
